# EUROPEAN PATENT APPLICATION

(11) **EP 3 683 473 A1**
(43) Date of publication of application: **22.07.2020**
(21) Application number: 18856265.6
(22) Date of filing: 06.09.2018
(51) Int. Cl.: F16F 15/03, F16H 25/20, F16H 25/22, F16H 25/24, H02K 49/10

(54) **EDDY CURRENT-TYPE DAMPER**

(30) Priority: 13.09.2017 JP 2017175304
(71) Applicant: Nippon Steel Corporation, Tokyo 100-8071 (JP)
(72) Inventor: NOGUCHI, Yasutaka, Tokyo 100-8071 (JP); IMANISHI, Kenji, Tokyo 100-8071 (JP); MASUI, Ryohsuke, Tokyo 100-8071 (JP); NOGAMI, Hiroshi, Tokyo 100-8071 (JP)
(74) Representative: Zimmermann & Partner Patentanwälte mbB
(86) International application number: PCT/JP2018/033061
(87) International publication number: WO 2019/054278

(57) **Abstract**

An eddy current damper (1) includes a screw shaft (7) movable in an axial direction, a plurality of first permanent magnets (3), a plurality of second permanent magnets (4), a cylindrical magnet holding member (2), a cylindrical conductive member (5) having conductivity, a ball nut (6) which meshes with the screw shaft (7), and a heat transfer layer (12) which covers a surface of the conductive member (5) opposed to the first permanent magnets (3) and the second permanent magnets (4). The magnet holding member (2) holds the first permanent magnet (3) and the second permanent magnet (4). The conductive member (5) is opposed to the first permanent magnets (3) and the second permanent magnets (4) with a gap therebetween. The ball nut (6) is disposed inside the magnet holding member (2) and the conductive member (5), and is fixed to the magnet holding member (2) or the conductive member (5). The heat transfer layer (12) has a thermal conductivity higher than that of the conductive member (5).

## Description

### TECHNICAL FIELD

The present invention relates to an eddy current damper.

### BACKGROUND ART

In order to protect buildings against vibration caused by earthquakes and the like, vibration control devices are attached to the buildings. Such a vibration control device converts kinetic energy given to a building into another type of energy (for example, heat energy). In this way, large shaking of the building is suppressed. The vibration control device is, for example, dampers. The type of the damper includes, for example, an oil type and a shear resistance type. In general, oil type and shear resistance type dampers are often used in buildings. An oil damper dampens vibration by utilizing incompressible fluid in a cylinder. A shear resistance type damper dampens vibration by utilizing the shear resistance of viscous fluid.

However, the viscosity of the viscous fluid used in the shear resistance type damper particularly depends on the temperature of the viscous fluid. In other words, the damping force of the shear resistance type damper depends on temperature. Therefore, when the shear resistance type damper is used for a building, it is necessary to select an appropriate viscous fluid in consideration of the use environment. Further, in a damper using a fluid, such as of an oil type or a shear resistance type, the pressure of the fluid may increase due to temperature rise or the like, thereby causing damage to mechanical elements such as a sealing material of cylinder. A damper, the damping force of which is much less dependent on temperature, includes an eddy current damper.

Conventional eddy current dampers are disclosed in, for example, Japanese Patent Publication No. 05-86496 (Patent Literature 1) and Japanese Patent Application Publication No. 2000-320607 (Patent Literature 2).

The eddy current damper of Patent Literature 1 includes a plurality of permanent magnets attached to a main cylinder, a hysteresis material connected to a screw shaft, a ball nut meshing with the screw shaft, and a sub-cylinder connected to the ball nut. The magnetic poles of the plurality of permanent magnets are differently arranged in an alternate manner. The hysteresis material has conductivity. Hereinafter, the hysteresis material is also referred to as a conductive member. The hysteresis material is opposed to the plurality of permanent magnets, and is relatively rotatable. When kinetic energy is applied to the eddy current damper, the sub-cylinder and the ball nut move in the axial direction, and the hysteresis member is rotated by the action of the ball screw. As a result, the kinetic energy is consumed by hysteresis loss. Further, Patent Literature 1 describes that the kinetic energy is consumed by eddy current loss because eddy current is generated in the hysteresis material.

The eddy current damper of Patent Literature 2 includes a guide nut that meshes with a screw shaft, a conductive drum attached to the guide nut, a casing provided on the inner peripheral surface side of the drum, and a plurality of permanent magnets which are attached to an outer peripheral surface of the casing, and are opposed to an inner peripheral surface of the drum with a certain gap therebetween. Even if the guide nut and the drum rotate as the screw shaft advances and retreats, the drum inner peripheral surface and the permanent magnet do not graze with each other because they are not in contact with each other. Accordingly, Patent Literature 2 states that the number of times of maintenance is decreased as compared with an oil damper.

### CITATION LIST

### PATENT LITERATURE

Patent Literature 1: Japanese Patent Publication No. 05-86496
Patent Literature 2: Japanese Patent Application Publication No. 2000-320607

### SUMMARY OF INVENTION

### TECHNICAL PROBLEM

In the eddy current damper of Patent Literature 1, a plurality of permanent magnets are arrayed along the circumferential direction. When kinetic energy is applied to this damper, the conductive member rotates in a magnetic field generated by each of the permanent magnets. In that occasion, an eddy current is generated in each region of the conductive member opposed to each of the permanent magnets in the surface. As a result, a braking force is applied to the rotating conductive member, thereby generating damping force. Further, each region where an eddy current is generated generates heat. Therefore, heat generating regions of the number of the permanent magnets are formed in the conductive member.

If the conductive member rotates at a high speed in one direction, the heat generating region moves in the circumferential direction at a high speed. Therefore, heat generation is uniformized in the circumferential direction, and temperature difference will not occur in the circumferential direction.

However, in an eddy current damper which is used as a vibration control device, the conductive member repeats normal rotation and reverse rotation in order to dampen vibration. In other words, the rotational direction of the conductive member is repeatedly switched. The rotational speed of the conductive member reaches zero at a switching point of rotational direction. As a result, the conductive member may rotate at a very low speed.

When the conductive member rotates at a very low speed, not only heat generating regions of the number of the permanent magnets are formed in the conductive member, but also low temperature regions are formed between the heat generating regions. The thermal expansion of the heat generating regions is restricted by the low temperature regions which exhibit low thermal expansion. For that reason, thermal strain is generated in the heat generating regions, and as a result, thermal stress is generated in the heat generating regions. If rotation at a very low speed is repeated, thermal stress is repeatedly applied, thus causing fatigue damage to the conductive member.

Especially in an eddy current damper in which the rotational direction of the conductive member is repeatedly switched, since the rotational speed in the circumferential direction of the conductive member necessarily changes due to its configuration, it is not likely that the heat generation of the conductive member is uniformized in the circumferential direction.

Further, in the eddy current damper of Patent Literature 2, since the guide nut is provided outside the drum, it is likely that dust enters between the guide nut and the ball screw. In the eddy current damper disclosed in Patent Literature 2, the guide nut is provided outside the drum, a flange portion of the guide nut is fixed to the drum, and the cylindrical portion of the guide nut extends toward the opposite side of the drum. Therefore, it is necessary to ensure a long distance (stroke distance of the ball screw) between the end on the opposite side of the drum of the cylindrical portion of the guide nut and a fixture fixed to the building so that the size of the eddy current damper tends to increase. Furthermore, Patent Literature 2 does not particularly mention a technique for managing the gap between the drum inner peripheral surface and the permanent magnet.

It is an object of the present invention to provide an eddy current damper which enables suppression of fatigue damage to a conductive member in which eddy currents are generated. It is another object of the present invention to provide an eddy current damper which can be down-sized.

### SOLUTION TO PROBLEM

The eddy current damper of the present embodiment includes: a screw shaft movable in an axial direction; a plurality of first permanent magnets arrayed along a circumferential direction around the screw shaft; a plurality of second permanent magnets each arranged between the first permanent magnets leaving gaps with the first permanent magnets, wherein arrangement of magnetic poles is inverted between the second permanent magnet and the first permanent magnet; a cylindrical magnet holding member for holding the first permanent magnets and the second permanent magnets; a cylindrical conductive member which has conductivity and is opposed to the first permanent magnets and the second permanent magnets with a gap therebetween; a ball nut which is arranged inside the magnet holding member and the conductive member and fixed to the magnet holding member or the conductive member, and meshes with the screw shaft; and a heat transfer layer which covers a surface of the conductive member opposed to the first permanent magnets and the second permanent magnets, and has a thermal conductivity higher than that of the conductive member.

### ADVANTAGEOUS EFFECTS OF INVENTION

According to the eddy current damper of the present embodiment, it is possible to suppress fatigue damage to the conductive member in which eddy currents are generated. Moreover, according to the eddy current damper of the present embodiment, down-sizing is possible.

### BRIEF DESCRIPTION OF DRAWINGS

[FIG. 1] FIG. 1 is a sectional view taken in a plane along an axial direction of an eddy current damper of a first embodiment.
[FIG. 2] FIG. 2 is a partially enlarged view of FIG. 1.
[FIG. 3] FIG. 3 is a sectional view taken in a plane perpendicular to the axial direction of the eddy current damper of the first embodiment.
[FIG. 4] FIG. 4 is a partially enlarged view of FIG. 3.
[FIG. 5] FIG. 5 is a perspective view showing first permanent magnets and second permanent magnets of the first embodiment.
[FIG. 6] FIG. 6 is a schematic diagram to show magnetic circuits of the eddy current damper of the first embodiment.
[FIG. 7] FIG. 7 is a perspective view showing first permanent magnets and second permanent magnets in which the magnetic poles are arranged in the circumferential direction.
[FIG. 8] FIG. 8 is a schematic diagram showing magnetic circuits of an eddy current damper of FIG. 7.
[FIG. 9] FIG. 9 is a perspective view showing first permanent magnets and second permanent magnets, which are arranged in a plurality of rows in the axial direction.
[FIG. 10] FIG. 10 is a sectional view taken in a plane along the axial direction of an eddy current damper of a second embodiment.
[FIG. 11] FIG. 11 is a sectional view taken in a plane perpendicular to the axial direction of the eddy current damper of the second embodiment.
[FIG. 12] FIG. 12 is a sectional view taken in a plane along the axial direction of an eddy current damper of a third embodiment.
[FIG. 13] FIG. 13 is a partially enlarged view of FIG. 12.
[FIG. 14] FIG. 14 is a sectional view taken in a plane along the axial direction of an eddy current damper of a fourth embodiment.

### DESCRIPTION OF EMBODIMENTS

The eddy current damper of the present embodiment includes a screw shaft movable in an axial direction, a plurality of first permanent magnets, a plurality of second permanent magnets, a cylindrical magnet holding member, a cylindrical conductive member having conductivity, a ball nut which meshes with the screw shaft, and a heat transfer layer which covers a surface of the conductive member opposed to the first permanent magnets and the second permanent magnets. The first permanent magnets are arrayed along the circumferential direction around the screw shaft. The second permanent magnets are each arranged between the first permanent magnets leaving gaps with the first permanent magnets, and arrangement of magnetic poles is inverted between the second permanent magnet and the first permanent magnet. The magnet holding member holds the first permanent magnets and the second permanent magnets. The conductive member is opposed to the first permanent magnets and the second permanent magnets with a gap therebetween. The ball nut is arranged inside the magnet holding member and the conductive member, and is fixed to the magnet holding member or the conductive member. The heat transfer layer has a thermal conductivity higher than that of the conductive member.

According to the eddy current damper of the present embodiment, when kinetic energy is applied to the damper, the screw shaft moves in the axial direction. The ball nut is rotated by the axial movement of the screw shaft. As a result, the conductive member is rotated relative to the first and second permanent magnets in magnetic fields generated by each of the first and second permanent magnets. In that occasion, an eddy current is generated respectively in a region of the surface of the conductive member opposed to each of the first and second permanent magnets. As a result, a braking force is applied to the rotating conductive member, thereby generating damping force. Further, heat is generated in each region where an eddy current is generated.

Here, the surface of the conductive member opposed to the first and second permanent magnets is covered by a heat transfer layer having a thermal conductivity higher than that of the conductive member. For that reason, when the conductive member is rotated at a very low speed relative to the first and second permanent magnets, the heat of the heat generating region occurred in the conductive member is quickly transmitted to the heat transfer layer, to be further dispersed in the circumferential direction of the heat transfer layer. As a result, it is possible to decrease the temperature difference that occurs in the circumferential direction of the conductive member. Therefore, it is possible to suppress fatigue damage to the conductive member in which eddy currents are generated.

Further, according to the eddy current damper of the present embodiment, the ball nut is arranged inside the conductive member and the magnet holding member. Even if kinetic energy is given to the eddy current damper through vibration or others, and the screw shaft is moved in the axial direction, the ball nut does not move in the axial direction. Therefore, it is not necessary to provide a movable range of ball nut in the eddy current damper. Therefore, components such as the magnet holding member and the conductive member can be reduced in size. This makes it possible to realize down-sizing of the eddy current damper. In addition, it is possible to realize weight reduction of the eddy current damper. Moreover, since each component has a simple configuration, assembly of the eddy current damper is facilitated. Furthermore, the component cost and manufacturing cost of the eddy current damper are reduced.

In the above described eddy current damper of the present embodiment, it is possible to adopt any of the following configurations (1) to (4).

(1) The magnet holding member is arranged inside the conductive member. The first permanent magnets and the second permanent magnets are attached to an outer peripheral surface of the magnet holding member. The ball nut is fixed to the magnet holding member.

In this case, the inner peripheral surface of the conductive member is opposed to the first and the second permanent magnets with a gap therebetween. A heat transfer layer is formed on the inner peripheral surface of the conductive member. The ball nut and the magnet holding member are rotated by the axial movement of the screw shaft. On the other hand, the conductive member is not rotatable. In this way, a magnetic flux which passes the conductive member from a first and a second permanent magnet changes, and an eddy current is generated in the inner peripheral surface of the conductive member. This eddy current generates a demagnetizing field, and a reaction force (braking force) is applied to the rotating magnet holding member. As a result, the screw shaft is subjected to a damping force.

Further, in this case, the conductive member is arranged outside the magnet holding member and is in contact with the outside air. In this way, the conductive member is cooled by the outside air. As a result, the temperature rise of the conductive member can be suppressed.

(2) The conductive member is arranged inside the magnet holding member. The first permanent magnets and the second permanent magnets are attached to the inner peripheral surface of the magnet holding member. The ball nut is fixed to the conductive member.

In this case, the outer peripheral surface of the conductive member is opposed to the first and the second permanent magnets with a gap therebetween. A heat transfer layer is formed on the outer peripheral surface of the conductive member. The ball nut and the conductive member are rotated by the axial movement of the screw shaft. On the other hand, the magnet holding member is not rotatable. This causes changes in the magnetic fluxes which pass through the conductive member from first and second permanent magnets, and thereby eddy currents are generated in the outer peripheral surface of the conductive member. These eddy currents generate demagnetizing fields and a reaction force is applied to the rotating conductive member. As a result, the screw shaft is subjected to a damping force.

Further, in this case, the magnet holding member is arranged outside the conductive member and is in contact with the outside air. In this way, the magnet holding member is cooled by the outside air. As a result, the temperature rises of the first and the second permanent magnets can be suppressed.

(3) The magnet holding member is arranged inside the conductive member. The first permanent magnets and the second permanent magnets are attached to the outer peripheral surface of the magnet holding member. The ball nut is fixed to the conductive member.

In this case, the inner peripheral surface of the conductive member is opposed to the first and the second permanent magnets with a gap therebetween. A heat transfer layer is formed on the inner peripheral surface of the conductive member. The ball nut and the conductive member are rotated by the axial movement of the screw shaft. On the other hand, the magnet holding member is not rotatable. In this way, magnetic fluxes which pass through the conductive member from first and second permanent magnets change, and eddy currents are generated in the inner peripheral surface of the conductive member. These eddy currents generate demagnetizing fields and a reaction force is applied to the rotating conductive member. As a result, the screw shaft is subjected to a damping force.

Further, in this case, the conductive member is arranged outside the magnet holding member and is in contact with the outside air. In this way, the rotating conductive member is efficiently cooled by the outside air. As a result, the temperature rise of the conductive member can be suppressed.

(4) The conductive member is arranged inside the magnet holding member. The first permanent magnets and the second permanent magnets are attached to the inner peripheral surface of the magnet holding member. The ball nut is fixed to the magnet holding member.

In this case, the outer peripheral surface of the conductive member is opposed to the first and the second permanent magnets with a gap therebetween. A heat transfer layer is formed on the outer peripheral surface of the conductive member. The ball nut and the magnet holding member are rotated by the axial movement of the screw shaft. On the other hand, the conductive member is not rotatable. In this way, magnetic fluxes which pass through the conductive member from first and second permanent magnets change, and eddy currents are generated in the outer peripheral surface of the conductive member. These eddy currents generate demagnetizing fields, and a reaction force is applied to the rotating magnet holding member. As a result, the screw shaft is subjected to a damping force.

Further, in this case, the magnet holding member is arranged outside the conductive member and is in contact with the outside air. In this way, the rotating magnet holding member is efficiently cooled by the outside air. As a result, temperature rises of the first and the second permanent magnets can be suppressed.

In the eddy current damper of the present embodiment, as long as the heat transfer layer has a thermal conductivity higher than that of the conductive member, the material of the heat transfer layer will not be limited. As a typical example, the heat transfer layer is a metal layer. Examples of technique of forming a metal layer on the conductive member include plating, overlay welding, brazing, thermal spraying, and thermal diffusion bonding. Among these techniques, plating is preferable. This is because it enables to simply form a metal layer (heat transfer layer) having a uniform thickness.

In the eddy current damper of the present embodiment, the heat transfer layer is preferably made of copper or a copper alloy. This is because copper and copper alloys have very high thermal conductivities.

When the heat transfer layer is made of copper or a copper alloy, the thickness of the heat transfer layer is preferably not less than 0.6 mm. If the thickness of the heat transfer layer of copper or a copper alloy is not less than 0.6 mm, heat which has been transmitted from the heat generating region of the conductive member to the heat transfer layer will be effectively dispersed in the circumferential direction of the heat transfer layer. In this case, the thickness of the heat transfer layer is preferably not less than 0.8 mm.

In the eddy current damper of the present embodiment, the heat transfer layer may be made of aluminum or an aluminum alloy. This is because thermal conductivities of aluminum and aluminum alloys are very high, although not as high as those of copper and copper alloys.

When the heat transfer layer is made of aluminum or an aluminum alloy, the thickness of the heat transfer layer is preferably not less than 1.0 mm. If the thickness of the heat transfer layer of aluminum or an aluminum alloy is not less than 1.0 mm, heat which has been transmitted to the heat transfer layer from the heat generating region of the conductive member is effectively dispersed in the circumferential direction of the heat transfer layer. In this case, the thickness of the heat transfer layer is preferably not less than 1.3 mm.

When the heat transfer layer is made of copper, a copper alloy, aluminum or an aluminum alloy, the thickness of the heat transfer layer is preferably not more than 2.0 mm. The reason of this is as follows. Copper, copper alloys, aluminum and aluminum alloys are non-magnetic materials. When thickness of the heat transfer layer of such a material is excessively large, the distance between the first and second permanent magnets and the conductive member increases, and braking force decreases. Therefore, when the heat transfer layer is made of copper, a copper alloy, aluminum or an aluminum alloy, the thickness of the heat transfer layer is preferably not more than 2.0 mm from the viewpoint of ensuring braking force.

In the eddy current damper of the present embodiment, the first permanent magnets may be arranged in a plurality of rows along the axial direction of the magnet holding member, and the second permanent magnets may be arranged in a plurality of rows along the axial direction of the magnet holding member.

In this case, even if the size of each of the first permanent magnets and the second permanent magnets is small, the total size of the plurality of first and the second permanent magnets is large. Therefore, the cost of the first and the second permanent magnets can be kept low while keeping high damping force of the eddy current damper. Moreover, it is easy to attach the first and the second permanent magnets to the magnet holding member.

Hereinafter, an eddy current damper of the present embodiment will be described with reference to the drawings.

### [First Embodiment]

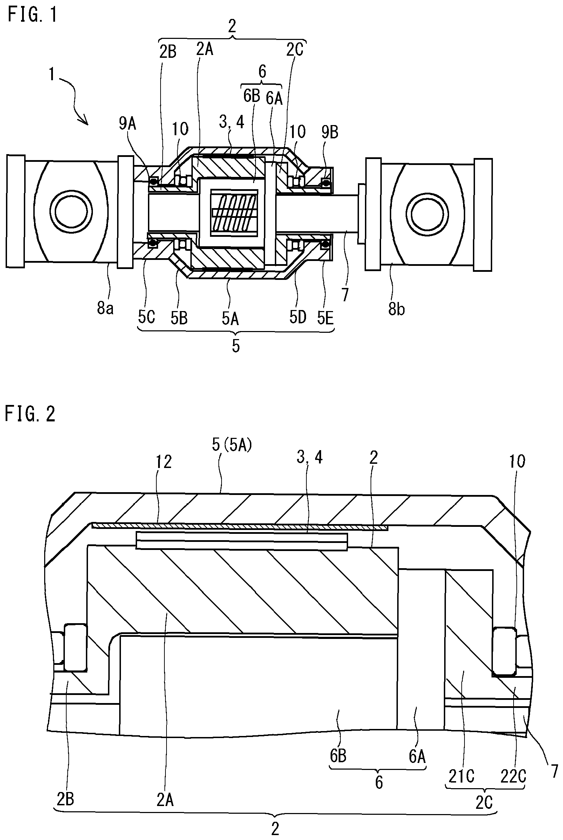

FIG. 1 is a sectional view taken in a plane along the axial direction of an eddy current damper of a first embodiment. FIG. 2 is a partially enlarged view of FIG. 1. Referring to FIGS. 1 and 2, an eddy current damper 1 includes a magnet holding member 2, a plurality of first permanent magnets 3, a plurality of second permanent magnets 4, a conductive member 5, a ball nut 6, a screw shaft 7, and a heat transfer layer 12 (see FIG. 2).

### [Magnet holding member]

The magnet holding member 2 includes a main cylinder 2A, a distal end side sub-cylinder 2B, and a root side sub-cylinder 2C.

The main cylinder 2A has a cylindrical shape with the screw shaft 7 as a central axis. The length of the main cylinder 2A in the axial direction of the screw shaft 7 is larger than the lengths of the first permanent magnet 3 and the second permanent magnet 4 in the axial direction of the screw shaft 7.

The distal end side sub-cylinder 2B extends from the end on the distal end side (the free end side of the screw shaft 7 or the fixture 8a side) of the main cylinder 2A. The distal end side sub-cylinder 2B has a cylindrical shape with the screw shaft 7 as its central axis. The outer diameter of the distal end side sub-cylinder 2B is smaller than the outer diameter of the main cylinder 2A.

The root side sub-cylinder 2C is provided on the root side (the fixture 8b side) of the main cylinder 2A with a flange portion 6A of a ball nut being interposed therebetween. The root side sub-cylinder 2C includes a flange fixing portion 21C and a cylindrical support portion 22C. The flange fixing portion 21C has a cylindrical shape with the screw shaft 7 as its central axis, and is fixed to the flange portion 6A of the ball nut. The cylindrical support portion 22C extends from the end of the root side (the fixture 8b side) of the flange fixing portion 21C, and has a cylindrical shape. The outer diameter of the cylindrical support portion is smaller than the outer diameter of the flange fixing portion 21C.

The magnet holding member 2 having such a configuration can accommodate the cylindrical portion 6B of the ball nut and a part of the screw shaft 7 thereinside. The material of the magnet holding member 2 is not particularly limited. However, the material of the magnet holding member 2 is preferably one having a high magnetic permeability, such as steel. The material of the magnet holding member 2 is, for example, a ferromagnetic material such as carbon steel or cast iron. In this case, the magnet holding member 2 serves as a yoke. In other words, magnetic fluxes from the first permanent magnets 3 and the second permanent magnets 4 are less likely to leak to the outside, and the damping force of the eddy current damper 1 is increased. As will be described later, the magnet holding member 2 is rotatable with respect to the conductive member 5.

### [First permanent magnet and second permanent magnet]

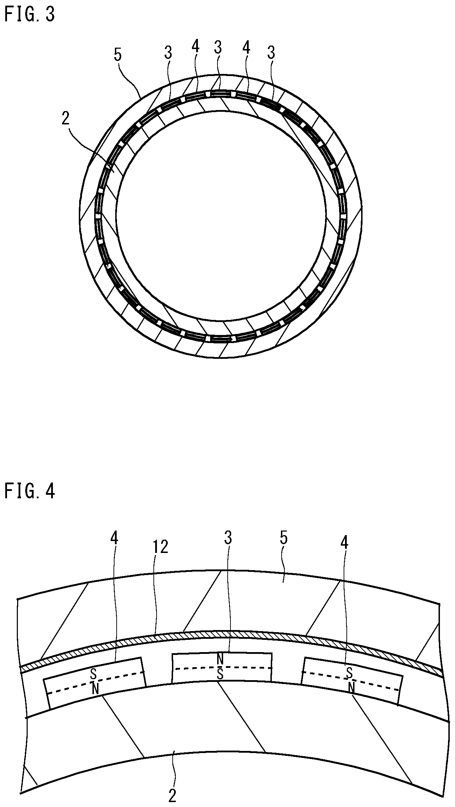

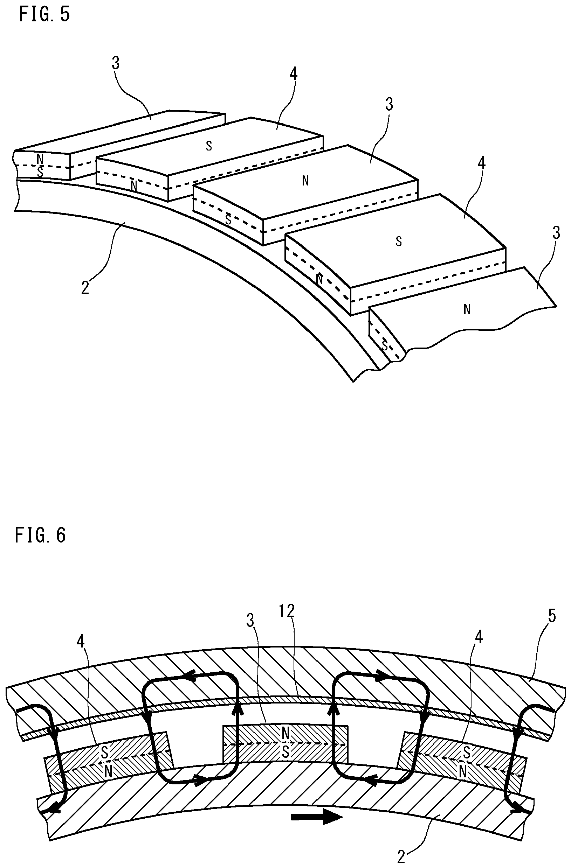

FIG. 3 is a sectional view taken in a plane perpendicular to the axial direction of an eddy current damper of the first embodiment. FIG. 4 is a partially enlarged view of FIG. 3. FIG. 5 is a perspective view showing first permanent magnets and second permanent magnets of the first embodiment. In FIG. 3 to FIG. 5, some components such as a screw shaft are omitted. Referring to FIG. 3 to FIG. 5, a plurality of first permanent magnets 3 and a plurality of second permanent magnets 4 are attached to an outer peripheral surface of the magnet holding member 2 (main cylinder 2A). The first permanent magnets 3 are arrayed around the screw shaft (that is, along the circumferential direction of the magnet holding member 2). Similarly, the second permanent magnets 4 are arrayed around the screw shaft (that is, along the circumferential direction of the magnet holding member 2). Second permanent magnets 4 are arranged between the first permanent magnets 3 leaving gaps therebetween. In other words, the first permanent magnets 3 and the second permanent magnets 4 are alternately arranged leaving gaps therebetween along the circumferential direction of the magnet holding member 2.

The magnetic poles of the first permanent magnet 3 and the second permanent magnet 4 are arranged in the radial direction of the magnet holding member 2. The arrangement of the magnetic poles of the second permanent magnet 4 is inverted from the arrangement of the magnetic poles of the first permanent magnet 3. For example, referring to FIGS. 4 and 5, the N poles of first permanent magnets 3 are arranged on the outer side, and the S poles thereof are arranged on the inner side, in the radial direction of the magnet holding member 2. Therefore, the S poles of the first permanent magnets 3 are in contact with the magnet holding member 2. On the other hand, in the radial direction of the magnet holding member 2, the N poles of the second permanent magnets 4 are arranged on the inner side, and the S poles thereof are arranged on the outer side. Therefore, the N poles of the second permanent magnets 4 are in contact with the magnet holding member 2.

The size and characteristics of the second permanent magnet 4 are preferably the same as the size and characteristics of the first permanent magnet 3. The first permanent magnets 3 and the second permanent magnets 4 are fixed to the magnet holding member 2 with an adhesive, for example. Of course, the first permanent magnets 3 and the second permanent magnets 4 may be fixed with screws or the like, without being limited to the adhesive.

### [Conductive member]

Referring to FIGS. 1 and 2, the conductive member 5 includes a central cylindrical portion 5A, a distal end side conical portion 5B, a distal end side cylindrical portion 5C, a root side conical portion 5D, and a root side cylindrical portion 5E.

The central cylindrical portion 5A has a cylindrical shape with the screw shaft 7 as its central axis. The inner peripheral surface of the central cylindrical portion 5A is opposed to the first permanent magnets 3 and the second permanent magnets 4 with a gap therebetween. The distance between the inner peripheral surface of the central cylindrical portion 5A and the first permanent magnets 3 (or the second permanent magnets 4) is constant along the axial direction of the screw shaft 7. The length of the central cylindrical portion 5A in the axial direction of the screw shaft 7 is larger than the lengths of the first permanent magnet 3 and the second permanent magnet 4 in the axial direction of the screw shaft 7.

The distal end side conical portion 5B has a conical shape with the screw shaft 7 as its central axis. The distal end side conical portion 5B extends from the end on the distal end side (the free end side of the screw shaft 7 or the fixture 8a side) of the central cylindrical portion 5A, and the outer diameter and inner diameter of the distal end side conical portion 5B become smaller as being closer to the distal end side (the free end side of the screw shaft 7 or the fixture 8a side).

The distal end side cylindrical portion 5C has a cylindrical shape with the screw shaft 7 as its central axis. The distal end side cylindrical portion 5C extends from the end of the distal end side (the free end side of the screw shaft 7 or the fixture 8a side) of the distal end side conical portion 5B. The end on the distal end side of the distal end side cylindrical portion 5C (the free end side of the screw shaft 7 or the fixture 8a side) is fixed to the fixture 8a.

The root side conical portion 5D has a conical shape with the screw shaft 7 as its central axis. The root side conical portion 5D extends from the end on the root side (the fixture 8b side) of the central cylindrical portion 5A, and the outer diameter and inner diameter of the root side conical portion 5D become smaller as moving toward the root side (the fixture 8b side).

The root side cylindrical portion 5E has a cylindrical shape with the screw shaft 7 as its central axis. The root side cylindrical portion 5E extends from the end on the root side (the fixture 8b side) of the root side conical portion 5D. The end on the root side (the fixture 8b side) of the root side cylindrical portion 5E is a free end.

The conductive member 5 having such a configuration can accommodate the magnet holding member 2, the first permanent magnets 3, the second permanent magnets 4, the ball nut 6, and a part of the screw shaft 7. In other words, the magnet holding member 2 is arranged in a concentric fashion inside the conductive member 5. As will be described later, in order to generate an eddy current in the inner peripheral surface of the conductive member 5 (the inner peripheral surface of the central cylindrical portion 5A), the conductive member 5 is rotated relative to the magnet holding member 2. Therefore, a gap is provided between the conductive member 5, and the first permanent magnets 3 and the second permanent magnets 4. The fixture 8a integral with the conductive member 5 is fixed to a building support surface, or within the building. Therefore, the conductive member 5 is not rotatable around the screw shaft 7.

The conductive member 5 has conductivity. The material of the conductive member 5 is a ferromagnetic material such as carbon steel, cast iron, or the like.

The conductive member 5 rotatably supports the magnet holding member 2. The supporting of the magnet holding member 2 is preferably configured, for example, as follows.

Referring to FIG. 1, the eddy current damper 1 further includes a distal end side bearing 9A and a root side bearing 9B. The distal end side bearing 9A is attached to the inner peripheral surface of the conductive member 5 (distal end side cylindrical portion 5C) at a position closer to the distal end side of the screw shaft 7 (the free end side of the screw shaft 7 or the fixture 8a side) than the first permanent magnets 3 and the second permanent magnets 4, to support the outer peripheral surface of the magnet holding member 2 (the distal end side sub-cylinder 2B). Further, the root side bearing 9B is attached to the inner peripheral surface of the conductive member 5 (the root side cylindrical portion 5E) at a position closer to the root side of the screw shaft 7 than the first permanent magnets 3 and the second permanent magnets 4, thereby supporting the outer peripheral surface of the magnet holding member 2 (the cylindrical support portion 22C).

With such a configuration, the magnet holding member 2 is supported on both sides of the first permanent magnets 3 and the second permanent magnets 4 in the axial direction of the screw shaft 7. Therefore, even if the magnet holding member 2 is rotated, the gap between the first permanent magnets 3 (second permanent magnet 4) and the conductive member 5 is likely to be kept at a constant distance. If the gap is kept at a constant distance, the braking force due to an eddy current can be stably obtained. Further, if the gap is kept at a constant distance, there is less possibility that the first permanent magnets 3 and the second permanent magnets 4 come into contact with the conductive member 5, and therefore the gap can be further reduced. In that way, as will be described later, the amount of magnetic fluxes from the first permanent magnets 3 and the second permanent magnets 4 passing through the conductive member 5 increases, thus allowing the braking force to further increase, or allowing desired braking force to be exerted even if the number of the permanent magnets is decreased.

A thrust bearing 10 is provided between the magnet holding member 2 and the conductive member 5 in the axial direction of the magnet holding member 2. Note that, of course, the types of the distal end side bearing 9A, the root side bearing 9B, and the thrust bearing 10 are not particularly limited, and may be a ball type, a roller type, a sliding type, or the like.

Note that the central cylindrical portion 5A, the distal end side conical portion 5B, the distal end side cylindrical portion 5C, the root side conical portion 5D, and the root side cylindrical portion 5E are respectively separate members, and are connected and assembled with bolts or the like.

Referring to FIGS. 2 and 4, the inner peripheral surface of the conductive member 5 is a surface opposed to a plurality of first permanent magnets 3 and second permanent magnets 4. A heat transfer layer 12 is formed on the inner peripheral surface of the conductive member 5. The heat transfer layer 12 of the present embodiment is a metal layer of copper or a copper alloy which is formed by plating. The thermal conductivity of the heat transfer layer 12 is higher than that of the conductive member 5.

### [Ball nut]

The ball nut 6 includes a flange portion 6A and a cylindrical portion 6B. The flange portion 6A has a cylindrical shape. The flange portion 6A is provided between the end on the root side (the fixture 8b side) of the main cylinder 2A of the magnet holding member and the end on the distal end side (the fixture 8a side) of the flange fixing portion 21C of the root side sub-cylinder 2C, and is fixed to both of them. The cylindrical portion 6B is provided closer to the distal end side of the screw shaft 7 than the flange portion 6A, and extends from the surface on the distal end side of the flange portion 6A.

The ball nut 6 having such a configuration is arranged inside the magnet holding member 2 and the conductive member 5. Since the ball nut 6 is fixed to the magnet holding member 2, when the ball nut 6 is rotated, the magnet holding member 2 also rotates. The type of the ball nut 6 is not particularly limited. As the ball nut 6, a known ball nut may be used. A threaded portion is formed on the inner peripheral surface of the ball nut 6. Note that, in FIG. 1, rendering of a part of the cylindrical portion 6B of the ball nut 6 is omitted so that the screw shaft 7 can be seen.

### [Screw shaft]

The screw shaft 7 penetrates the ball nut 6 and meshes with the ball nut 6 via a ball. A threaded portion corresponding to the threaded portion of the ball nut 6 is formed on the outer peripheral surface of the screw shaft 7. The screw shaft 7 and the ball nut 6 constitute a ball screw. The ball screw converts the axial movement of the screw shaft 7 into the rotational movement of the ball nut 6. A fixture 8b is connected to the screw shaft 7. The fixture 8b integral with the screw shaft 7 is fixed to a building support surface or within the building. In the case where the eddy current damper 1 is installed, for example, in a seismic isolation layer lying between within the building and the building support surface, a fixture 8b integral with the screw shaft 7 is fixed within the building, and the fixture 8a integral with the conductive member 5 is fixed to the building support surface. In the case where the eddy current damper 1 is installed, for example, between arbitrary layers within a building, the fixture 8b integral with the screw shaft 7 is fixed to the upper beam side between the arbitrary layers, and the fixture 8a integral with the conductive member 5 is fixed to the lower beam side between arbitrary layers. Therefore, the screw shaft 7 is not rotatable around the axis.

Fixing of the fixture 8b integral with the screw shaft 7 and the fixture 8a integral with the conductive member 5 may be reversed from the aforementioned description. In other words, the fixture 8b integral with the screw shaft 7 may be fixed to the building support surface, and the fixture 8a integral with the conductive member 5 may be fixed within the building.

The screw shaft 7 can move back and forth along the axial direction inside the magnet holding member 2 and the conductive member 5. Accordingly, when kinetic energy is applied to the eddy current damper 1 due to vibration or the like, the screw shaft 7 moves in the axial direction. If the screw shaft 7 moves in the axial direction, the ball nut 6 rotates around the screw shaft by the action of ball screw. As the ball nut 6 rotates, the magnet holding member 2 is rotated. As a result, since the first permanent magnets 3 and the second permanent magnets 4, which are integral with the magnet holding member 2, rotate relative to the conductive member 5, an eddy current is generated in the conductive member 5. As a result, a damping force is generated in the eddy current damper 1, thereby damping vibration.

According to the eddy current damper 1 of the present embodiment, the inner peripheral surface, which is opposed to the first permanent magnets 3 and the second permanent magnets 4, of the conductive member 5 is covered with the heat transfer layer 12 which has a thermal conductivity higher than that of the conductive member 5. For that reason, when the conductive member 5 is rotated at a very low speed relative to the first permanent magnets 3 and second permanent magnets 4, the heat of the heat generating region occurred in the conductive member 5 is quickly transmitted to the heat transfer layer 12 and is further dispersed in the circumferential direction of the heat transfer layer 12. As a result, it is possible to decrease the temperature difference that occurs in the circumferential direction of the conductive member 5. Therefore, it is possible to suppress fatigue damage to the conductive member 5 in which eddy currents are generated.

Further, according to the eddy current damper 1 of the present embodiment, the ball nut 6 is arranged inside the conductive member 5 and the magnet holding member 2. Even if kinetic energy is applied to the eddy current damper 1 due to vibration or the like, and the screw shaft 7 integral with the fixture 8b moves in the axial direction, the ball nut 6 does not move in the axial direction. Therefore, it is not necessary to provide a movable range of the ball nut 6 in the eddy current damper 1. For that reason, it is possible to reduce the sizes of components such as the magnet holding member 2 and the conductive member 5. In this way, the eddy current damper 1 can be reduced in size, and thus weight reduction of the eddy current damper 1 can be realized.

Further, since the ball nut 6 is arranged inside the conductive member 5 and the magnet holding member 2, dust becomes less likely to enter between the ball nut 6 and the screw shaft 7, and the screw shaft 7 can be smoothly moved over a long period of time. Further, arranging the ball nut 6 inside the conductive member 5 and the magnet holding member 2 allows reduction of a distance between the end on the distal end side (the fixture 8a side) of the fixture 8b and the end on the root side (the fixture 8b side) of the conductive member 5, thus allowing downsizing of the eddy current damper. In addition, since each component has a simple configuration, the eddy current damper 1 can be easily assembled. Moreover, the component cost and manufacturing cost of the eddy current damper 1 are reduced.

The conductive member 5 accommodates the first permanent magnets 3 and the second permanent magnets 4 thereinside. In other words, the length of the conductive member 5 in the axial direction of the screw shaft 7 is larger than the length of the first permanent magnets 3 (the second permanent magnets 4) in the axial direction of the screw shaft 7, and thus the volume of the conductive member 5 is large. When the volume of the conductive member 5 increases, the heat capacity of the conductive member 5 also increases. Therefore, the temperature rise of the conductive member 5 due to generation of eddy current is suppressed. When the temperature rise of the conductive member 5 is suppressed, the temperature rises of the first permanent magnets 3 and the second permanent magnets 4 due to radiant heat from the conductive member 5 will be suppressed, and demagnetization due to temperature rises of the first permanent magnets 3 and the second permanent magnets 4 will be suppressed.

Next, principles of generation of eddy current, and principles of generation of damping force due to eddy current will be described.

### [Damping force due to eddy current]

FIG. 6 is a schematic diagram showing magnetic circuits of an eddy current damper. Referring to FIG. 6, the arrangement of magnetic poles of a first permanent magnet 3 is inverted from the arrangement of magnetic poles of adjacent second permanent magnets 4. Therefore, magnetic fluxes emitted from the N pole of a first permanent magnet 3 reach the S poles of the adjacent second permanent magnets 4. Magnetic fluxes emitted from the N poles of a second permanent magnet reach S poles of the adjacent first permanent magnets 3. As a result, a magnetic circuit is formed within a first permanent magnet 3, a second permanent magnet 4, the conductive member 5, and the magnet holding member 2. Since the gap between the first permanent magnet 3 and the conductive member 5, or between the second permanent magnet 4 and the conductive member 5 is sufficiently small, the conductive member 5 is within a magnetic field.

When the magnet holding member 2 rotates (see the arrow in FIG. 6), the first permanent magnets 3 and the second permanent magnets 4 move with respect to the conductive member 5. Therefore, the magnetic fluxes passing through the surface of the conductive member 5 (in FIG. 6, the inner peripheral surface of the conductive member 5 opposed to the first permanent magnets 3 and the second permanent magnets 4) change. In this way, eddy currents are generated in the surface of the conductive member 5 (in FIG. 6, the inner peripheral surface of the conductive member 5). When an eddy current is generated, a new magnetic flux (demagnetizing field) is generated. This new magnetic flux hinders relative rotation between the magnet holding member 2 (the first permanent magnets 3 and the second permanent magnets 4) and the conductive member 5. In the case of the present embodiment, the rotation of the magnet holding member 2 is hindered. When the rotation of the magnet holding member 2 is hindered, the rotation of the ball nut 6 integral with the magnet holding member 2 is also hindered. When the rotation of the ball nut 6 is hindered, the axial movement of the screw shaft 7 is also hindered. This is the damping force of the eddy current damper 1. An eddy current generated by kinetic energy due to vibration or the like increases the temperature of the conductive member. In other words, kinetic energy applied to the eddy current damper is converted into thermal energy, and a damping force is obtained.

According to the eddy current damper of the present embodiment, the arrangement of the magnetic poles of a first permanent magnet is inverted from the arrangement of the magnetic poles of a second permanent magnet adjacent to the first permanent magnet in the circumferential direction of the magnet holding member. Therefore, a magnetic field due to the first permanent magnet and the second permanent magnet is generated in the circumferential direction of the magnet holding member. Further, by arraying first permanent magnets and second permanent magnets in a plural number in the circumferential direction of the magnet holding member, the amount of magnetic flux that reaches the conductive member is increased. In this way, the eddy current generated in the conductive member is increased, and the damping force of the eddy current damper is increased.

### [Arrangement of magnetic poles]

In the above description, a case in which arrangement of the magnetic poles of the first permanent magnets and the second permanent magnets is in the radial direction of the magnet holding member has been described. However, the arrangement of the magnetic poles of the first permanent magnets and the second permanent magnets is not limited to this.

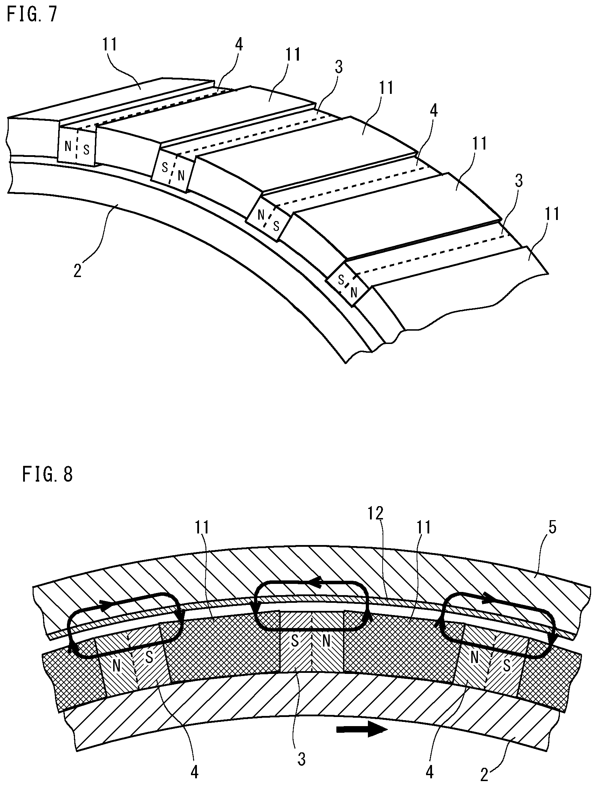

FIG. 7 is a perspective view showing the first permanent magnets and the second permanent magnets, in which the magnetic poles are arranged in the circumferential direction. Referring to FIG. 7, arrangements of the magnetic poles of first permanent magnets 3 and second permanent magnets 4 are along the circumferential direction of the magnet holding member 2. Even in this case, the arrangement of the magnetic poles of a first permanent magnet 3 is inverted from the arrangement of the magnetic poles of a second permanent magnet 4. A ferromagnetic pole piece 11 is provided between a first permanent magnet 3 and a second permanent magnet 4.

FIG. 8 is a schematic diagram showing magnetic circuits of the eddy current damper of FIG. 7. Referring to FIG. 8, a magnetic flux emitted from an N pole of a first permanent magnet 3 passes through a pole piece 11 and reaches an S pole of the first permanent magnet 3. The same applies to the second permanent magnets 4. As a result, a magnetic circuit is formed within a first permanent magnet 3, a second permanent magnet 4, a pole piece 11, and the conductive member 5. In this way, a damping force is obtained in the eddy current damper 1 in the same as described above.

### [Arrangement of permanent magnets in axial direction]

In order to increase the damping force of the eddy current damper 1, the eddy current generated in the conductive member may be increased. One way to generate a large eddy current is to increase the amount of magnetic flux emanating from a first permanent magnet and a second permanent magnet. In other words, the sizes of the first permanent magnet and the second permanent magnet may be increased. However, when the first permanent magnet and the second permanent magnet are large in size, they are high in cost and attaching them to the magnet holding member is not easy.

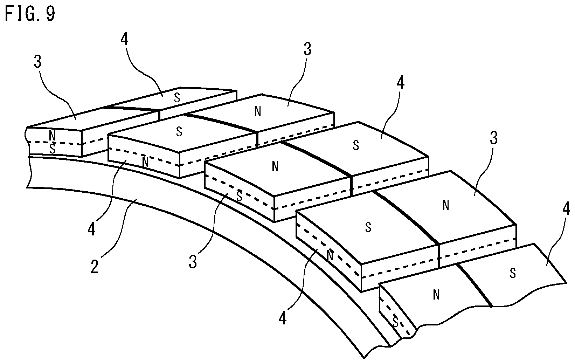

FIG. 9 is a perspective view showing first permanent magnets and second permanent magnets, which are arranged in a plurality of rows in the axial direction. Referring to FIG. 9, first permanent magnets 3 and second permanent magnets 4 may be arranged in a plurality of rows in the axial direction of one magnet holding member 2. In this way, each size of one first permanent magnet 3 and one second permanent magnet 4 may be small. On the other hand, the total size of the plurality of first permanent magnets 3 and second permanent magnets 4 which are attached to the magnet holding member 2 is large. Therefore, the costs of the first permanent magnet 3 and the second permanent magnet 4 can be kept low. Moreover, attaching the first permanent magnet 3 and the second permanent magnet 4 to the magnet holding member 2 is also easy.

Arrangement of the first permanent magnets 3 and the second permanent magnets 4, which are arranged in the axial direction, in the circumferential direction of the magnet holding member 2 is the same as described above. In other words, the first permanent magnets 3 and the second permanent magnets 4 are alternately arranged along the circumferential direction of the magnet holding member 2.

From the viewpoint of increasing the damping force of the eddy current damper 1, the first permanent magnet 3 is preferably adjacent to the second permanent magnet 4 in the axial direction of the magnet holding member 2. In this case, the magnetic circuit is generated not only in the circumferential direction of the magnet holding member 2 but also in the axial direction thereof. Therefore, the eddy current generated in the conductive member 5 is increased. As a result, the damping force of the eddy current damper 1 increases.

However, in the axial direction of the magnet holding member 2, the arrangement of the first permanent magnet 3 and the second permanent magnet 4 is not particularly limited. In other words, in the axial direction of the magnet holding member 2, a first permanent magnet 3 may be arranged next to a first permanent magnet 3 or may be arranged next to a second permanent magnet 4.

In the first embodiment described above, description has been made on a case in which the magnet holding member is arranged inside the conductive member; the first permanent magnets and the second permanent magnets are attached to the outer peripheral surface of the magnet holding member; and further the magnet holding member is rotatable. However, the eddy current damper of the present embodiment will not be limited to this.

### [Second embodiment]

In an eddy current damper according to a second embodiment, a magnet holding member is arranged outside a conductive member and is not rotatable. Eddy currents are generated as a result of rotation of the inner conductive member. Note that, in the eddy current damper of the second embodiment, the arrangement relationship between the magnet holding member and the conductive member is reversed from that of the first embodiment. However, the shape of the magnet holding member of the second embodiment is the same as that of the conductive member of the first embodiment, and the shape of the conductive member of the second embodiment is the same as that of the magnet holding member of the first embodiment. Therefore, in the second embodiment, detailed description on the shapes of the magnet holding member and the conductive member will be omitted.

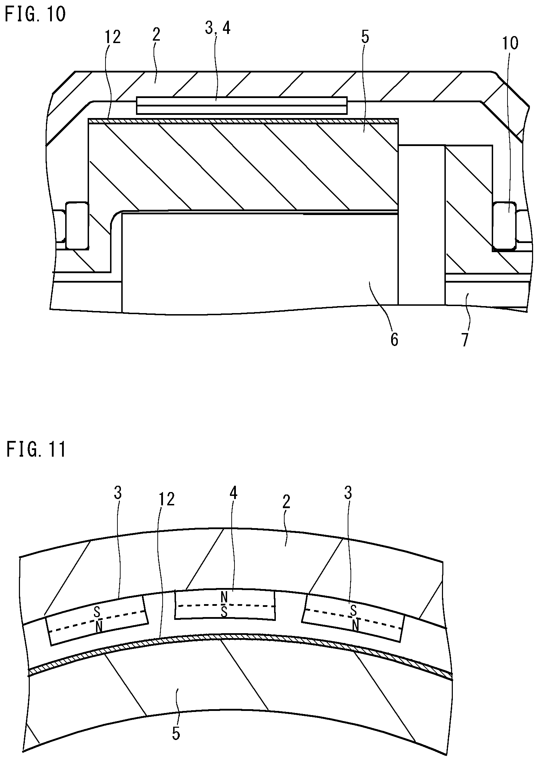

FIG. 10 is a sectional view taken in a plane along the axial direction of an eddy current damper of a second embodiment. FIG. 11 is a sectional view taken in a plane perpendicular to the axial direction of the eddy current damper according to the second embodiment. With reference to FIGS. 10 and 11, the magnet holding member 2 can accommodate a conductive member 5, a ball nut 6, and a screw shaft 7. The first permanent magnets 3 and the second permanent magnets 4 are attached to the inner peripheral surface of the magnet holding member 2. Therefore, the outer peripheral surface of the conductive member 5 is opposed to the first permanent magnets 3 and the second permanent magnets 4 with a gap therebetween. A heat transfer layer 12 is formed on the outer peripheral surface of the conductive member 5.

The fixture 8a shown in FIG. 1 is connected to the magnet holding member 2. Therefore, the magnet holding member 2 is not rotatable around the screw shaft 7. On the other hand, the ball nut 6 is connected to the conductive member 5. Accordingly, when the ball nut 6 is rotated, the conductive member 5 rotates. Even in such a configuration, as described above, since the first permanent magnets 3 and the second permanent magnets 4, which are integral with the magnet holding member 2, are rotated relative to the conductive member 5, eddy currents are generated in the conductive member 5. As a result, a damping force is generated in the eddy current damper 1, enabling to dampen vibration.

### [Third embodiment]

In an eddy current damper of a third embodiment, the magnet holding member is arranged inside the conductive member, and is not rotatable. An eddy current is generated as a result of rotation of the conductive member in the outside.

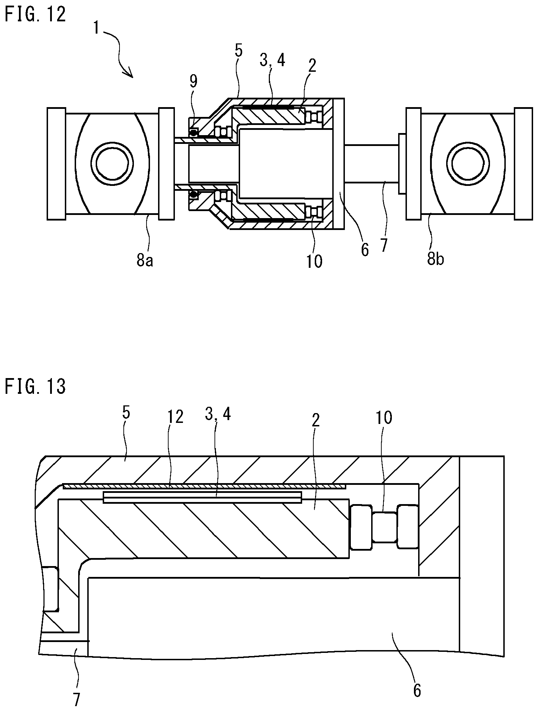

FIG. 12 is a sectional view taken in a plane along the axial direction of an eddy current damper of a third embodiment. FIG. 13 is a partially enlarged view of FIG. 12. Referring to FIGS. 12 and 13, a conductive member 5 can accommodate a magnet holding member 2, a ball nut 6, and a screw shaft 7. The first permanent magnets 3 and the second permanent magnets 4 are attached to the outer peripheral surface of the magnet holding member 2. Therefore, the inner peripheral surface of the conductive member 5 is opposed to the first permanent magnets 3 and the second permanent magnets 4 with a gap therebetween. A heat transfer layer 12 is formed on the inner peripheral surface of the conductive member 5.

The fixture 8a is connected to the magnet holding member 2. Therefore, the magnet holding member 2 is not rotatable around the screw shaft 7. On the other hand, the ball nut 6 is connected to the conductive member 5. Accordingly, when the ball nut 6 is rotated, the conductive member 5 rotates. Even in such a configuration, since the first permanent magnets 3 and the second permanent magnets 4, which are integral with the magnet holding member 2, rotate relative to the conductive member 5 as described above, eddy currents are generated in the conductive member 5. As a result, a damping force is generated in the eddy current damper 1, thereby enabling to dampen vibration.

### [Fourth embodiment]

In an eddy current damper of a fourth embodiment, the conductive member is arranged inside the magnet holding member, and is not rotatable. Eddy currents are generated as a result of rotation of the magnet holding member in the outside.

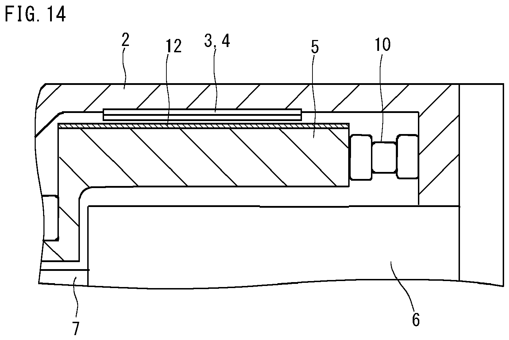

FIG. 14 is a sectional view taken in a plane along the axial direction of the eddy current damper of the fourth embodiment. Referring to FIG. 14, a magnet holding member 2 can accommodate a conductive member 5, a ball nut 6 and a screw shaft 7. First permanent magnets 3 and second permanent magnets 4 are attached to the inner peripheral surface of the magnet holding member 2. Therefore, the outer peripheral surface of the conductive member 5 is opposed to the first permanent magnets 3 and the second permanent magnets 4 with a gap therebetween. A heat transfer layer 12 is formed on the outer peripheral surface of the conductive member 5.

The fixture 8a shown in FIG. 1 is connected to the conductive member 5. Therefore, the conductive member 5 is not rotatable around the screw shaft 7. On the other hand, the ball nut 6 is fixed to the magnet holding member 2. Therefore, when the ball nut 6 is rotated, the magnet holding member 2 rotates. Even in such a configuration, since the first permanent magnets 3 and the second permanent magnets 4, which are integral with the magnet holding member 2, rotate relative to the conductive member 5 as described above, eddy currents are generated in the conductive member 5. As a result, a damping force is generated in the eddy current damper 1, thereby enabling to dampen vibration.

As described above, when the eddy current damper generates a damping force, the temperature of the conductive member rises. The first permanent magnets and the second permanent magnets are opposed to the conductive member. Therefore, the temperature of the first permanent magnets and the second permanent magnets may rise due to radiant heat from the conductive member and the heat transfer layer. If the temperature of the permanent magnets increases, the magnetic force may decrease.

In the eddy current damper according to the first embodiment, the conductive member 5 is arranged outside the magnet holding member 2. In other words, the conductive member 5 is arranged on the outermost side, and is in contact with the outside air. In this way, the conductive member 5 is cooled by the outside air. Therefore, the temperature rise of the conductive member 5 can be suppressed. As a result, the temperature rises of the first permanent magnets and the second permanent magnets can be suppressed.

In the eddy current damper according to the second embodiment, the magnet holding member 2 is arranged outside the conductive member 5. In other words, the magnet holding member 2 is arranged on the outermost side and comes into contact with the outside air. In this way, the magnet holding member 2 is cooled by the outside air. Therefore, the first permanent magnets and the second permanent magnets can be cooled through the magnet holding member 2. As a result, the temperature rises of the first permanent magnets and the second permanent magnets can be suppressed.

In the eddy current damper of the third embodiment, the conductive member 5 is arranged outside the magnet holding member 2. In other words, the conductive member 5 is arranged on the outermost side, and is in contact with the outside air. Further, the conductive member 5 is rotatable around the screw shaft 7. In this way, the rotating conductive member 5 is efficiently cooled by the outside air. Therefore, the temperature rise of the conductive member 5 can be suppressed. As a result, the temperature rises of the first permanent magnets and the second permanent magnets can be suppressed.

In the eddy current damper according to the fourth embodiment, the magnet holding member 2 is arranged outside the conductive member 5. In other words, the magnet holding member 2 is arranged on the outermost side, and is contact with the outside air. Further, the magnet holding member 2 is rotatable around the screw shaft 7. In this way, the rotating magnet holding member 2 is efficiently cooled by the outside air. Therefore, the first permanent magnets and the second permanent magnets can be cooled through the magnet holding member 2. As a result, the temperature rises of the first permanent magnets 3 and the second permanent magnets 4 can be suppressed.

So far, the eddy current damper of the present embodiment has been described. Since an eddy current is generated by the change of the magnetic flux passing through the conductive member 5, the first permanent magnet 3 and the second permanent magnet 4 may be rotated relative to the conductive member 5. In addition, as long as the conductive member 5 exists in the magnetic field generated by the first permanent magnet 3 and the second permanent magnet 4, the positional relationship between the conductive member and the magnet holding member is not particularly limited.

In addition, it goes without saying that the present invention is not limited to the above described embodiments, and various modifications can be made without departing from the spirit of the present invention.

### INDUSTRIAL APPLICABILITY

The eddy current damper of the present invention is useful for vibration control devices and seismic isolation devices of buildings.

### REFERENCE SIGNS LIST

1: Eddy current damper
2: Magnet holding member
3: First permanent magnet
4: Second permanent magnet
5: Conductive member
6: Ball nut
7: Screw shaft
8a, 8b: Fixture
9: Radial bearing
10: Thrust bearing
11: Pole Piece
12: Heat transfer layer

## Claims

1. An eddy current damper, comprising:
a screw shaft movable in an axial direction;
a plurality of first permanent magnets arrayed along a circumferential direction around the screw shaft;
a plurality of second permanent magnets each arranged between the first permanent magnets leaving gaps with the first permanent magnets, wherein arrangement of magnetic poles is inverted between the second permanent magnet and the first permanent magnet;
a cylindrical magnet holding member for holding the first permanent magnets and the second permanent magnets;
a cylindrical conductive member which has conductivity and is opposed to the first permanent magnets and the second permanent magnets with a gap therebetween;
a ball nut which is arranged inside the magnet holding member and the conductive member and fixed to the magnet holding member or the conductive member, and meshes with the screw shaft; and
a heat transfer layer which covers a surface of the conductive member opposed to the first permanent magnets and the second permanent magnets, and has a thermal conductivity higher than that of the conductive member.

2. The eddy current damper according to claim 1, wherein
the heat transfer layer is made of copper or a copper alloy.

3. The eddy current damper according to claim 2, wherein
a thickness of the heat transfer layer is not less than 0.6 mm.

4. The eddy current damper according to claim 1, wherein
the heat transfer layer is made of aluminum or an aluminum alloy.

5. The eddy current damper according to claim 4, wherein
a thickness of the heat transfer layer is not less than 1.0 mm.

6. The eddy current damper according to any one of claims 2 to 5, wherein
a thickness of the heat transfer layer is not more than 2.0 mm.
